# EUROPEAN PATENT APPLICATION

(11) **EP 4 632 102 A1**
(43) Date of publication of application: **15.10.2025**
(21) Application number: 23899657.3
(22) Date of filing: 31.10.2023
(51) Int. Cl.: C22C 38/02, C22C 38/04, C22C 38/42, C22C 38/44, C22C 38/46, C21D 8/02

(54) **LOW-TEMPERATURE STEEL FOR MARINE ENGINEERING, AND PRODUCTION METHOD THEREFOR**

(30) Priority: 05.12.2022 CN 202211549601
(71) Applicant: Institute of Research of Iron and Steel, Jiangsu Province/Sha-Steel, Co. Ltd (CN), Suzhou, Jiangsu 215625 (CN); Jiangsu Shagang Steel Co., Ltd., Suzhou, Jiangsu 215625 (CN); Jiangsu Shagang Group Co., Ltd., Suzhou, Jiangsu 215625 (CN)
(72) Inventor: YE, Qibin, Suzhou, Jiangsu 215625 (CN); QU, Jinbo, Suzhou, Jiangsu 215625 (CN)
(74) Representative: Gille Hrabal Partnerschaftsgesellschaft mbB Patentanwälte
(86) International application number: PCT/CN2023/128655
(87) International publication number: WO 2024/120076

(57) **Abstract**

The present application discloses a cryogenic steel for offshore engineering and a production method thereof. The chemical composition of the steel comprises: carbon 0.07-0.13%, silicon 0.1-0.4%, manganese 0.6-1.5%, nickel 5-9%, chromium 0.6-0.8%, molybdenum 0.6-0.9%, vanadium 0.1-0.16%, copper 0.4-0.8%, with the balance being iron and impurities. The process route adopts smelting → refining → continuous casting → heating → rolling → cooling → three-stage heat treatment. The first stage heat treatment is performed at 800-850°C with a holding time coefficient of 1-1.5min/mm, followed by water cooling; the second stage heat treatment is performed at 700-720°C with a holding time coefficient of 1-1.5min/mm, followed by water cooling; the third stage heat treatment is performed at 600-620°C with a holding time coefficient of 2-2.5min/mm, followed by air cooling. The steel exhibits excellent comprehensive properties in environments below -80°C, meeting the requirements of offshore engineering fields.

## Description

### TECHNICAL FIELD

The present application belongs to the field of steel material processing technology, and relates to a cryogenic steel for offshore engineering and a production method thereof.

### BACKGROUND

In recent years, the development of offshore resources in polar and other low-temperature regions has experienced rapid growth, creating an urgent demand for cold-resistant offshore engineering equipment. Offshore engineering steel for low-temperature environments is required not only to have high strength, good elongation, and weldability but also to possess excellent ultra-low temperature toughness to ensure reliability during safe service life. Furthermore, the increased difficulty in extracting oil and gas resources at depths exceeding 3000 meters also necessitates the use of large quantities of ultra-high-strength structural materials. Therefore, structural steel with high strength, high plasticity, easy weldability, and excellent low-temperature toughness has important application prospects in offshore engineering fields such as extremely cold and deep-sea environments.

Existing offshore engineering steel generally adopts a single martensitic structure with high dislocation density to achieve high-strength performance above 600MPa yield strength. However, such steel plates have the following defects: 1) insufficient low-temperature toughness, for example, unable to meet the requirements of low-temperature offshore engineering projects below -80°C; 2) insufficient plasticity and high yield ratio, as the yield strength increases, the elongation after fracture of the steel plate decreases, and the plastic deformation redundancy from yield to fracture is reduced, increasing the risk of brittle fracture and seriously affecting the service safety of the structure; 3) moreover, insufficient strength, for instance, such steel plates cannot achieve 1GPa-grade high strength.

### SUMMARY

The object of the present application is to provide a cryogenic steel for offshore engineering and a production method thereof, which can meet the comprehensive requirements of ultra-high strength, high plasticity, easy weldability, and excellent low-temperature toughness for steel materials in offshore engineering fields such as extremely cold and deep-sea environments.

To achieve the above object, one embodiment provides a cryogenic steel for offshore engineering. The chemical composition of the cryogenic steel in mass percentage is: C: 0.07-0.13%, Si: 0.10-0.40%, Mn: 0.60-1.50%, Ni: 5.00-9.0%, Cr: 0.60-0.80%, Mo: 0.60-0.90%, V: 0.10-0.16%, Cu: 0.40-0.80%, P≤0.003%, S≤0.002%, with the balance being iron and inevitable impurities.

Further, the microstructure of the cryogenic steel comprises martensite and austenite; the volume percentage of martensite is above 75% and less than 85%, and the volume percentage of austenite is above 15% and less than 25%.

Further, the cryogenic steel has nano-precipitated phases of (MoV)C particles and Cu particles, wherein the volume percentage of the precipitated phases is less than 0.1%.

Further, at a cryogenic temperature of -196°C, the cryogenic steel has a yield strength above 1200MPa, an elongation after fracture above 30%, a yield ratio below 0.84, and an impact energy above 150J.

Further, at a cryogenic temperature of -80°C, the cryogenic steel has a yield strength above 1000MPa, an elongation after fracture above 25%, a yield ratio below 0.94, and an impact energy above 160J.

To achieve the above object, one embodiment provides a production method for a cryogenic steel for offshore engineering. The production method comprises the following steps:
sequentially performing smelting, refining and continuous casting to obtain a continuous casting slab; wherein the chemical composition of the continuous casting slab in mass percentage is: C: 0.07-0.13%, Si: 0.10-0.40%, Mn: 0.60-1.50%, Ni: 5.00-9.0%, Cr: 0.60-0.80%, Mo: 0.60-0.90%, V: 0.10-0.16%, Cu: 0.40-0.80%, P≤0.003%, S≤0.002%, with the balance being iron and inevitable impurities;
heating the continuous casting slab in a heating furnace to 1100-1150°C and holding for 2-3h;
rolling the continuous casting slab from the heating furnace into a steel plate at a rolling temperature of 950-1050°C;
laminar cooling the obtained steel plate at a cooling rate higher than 20°C/s to below 200°C, and then sequentially performing three-stage heat treatment to obtain the finished cryogenic steel; wherein the first stage heat treatment is performed at a temperature of 800-850°C, with a holding time coefficient of 1.0-1.5min/mm and water cooling; the second stage heat treatment is performed at a temperature of 700-720°C, with a holding time coefficient of 1.0-1.5min/mm and water cooling; and the third stage heat treatment is performed at a temperature of 600-620°C, with a holding time coefficient of 2.0-2.5min/mm and air cooling.

Preferably, in the step of "rolling the continuous casting slab from the heating furnace into a steel plate", the average reduction ratio per pass is above 15%, and the thickness of the obtained steel plate is 10-100mm.

Preferably, in the step of "sequentially performing smelting, refining and continuous casting to obtain a continuous casting slab", the tundish steel superheat during continuous casting is ≤20°C, and full protection casting is adopted, wherein the inclusion ratings of class A, B, C and D of the obtained continuous casting slab are all ≤0.5 grade.

Preferably, the tundish steel superheat is 10-20°C.

Preferably, in the step of "laminar cooling the obtained steel plate at a cooling rate higher than 20°C/s to below 200°C", the laminar cooling is performed at a cooling rate below 30°C/s until the temperature drops to 30-200°C.

Compared with the prior art, the present application has the following advantageous effects:
1) Based on low carbon content, a design scheme of high nickel, high vanadium, low manganese + molybdenum, chromium, and copper is adopted. The low C content ensures the weldability and toughness of the steel, and low carbon and low manganese avoid the formation of large amounts of segregation banded structures, ensuring uniformity of structure and properties. High Ni content promotes the formation of retained austenite and, together with C, improves the stability of austenite. Mo and V can form nano-sized complex carbide (MoV)C particles to improve strength, while Cu element increases strength while enhancing the stability of retained austenite;
2) Based on the chemical composition, through high-temperature rolling + rapid cooling + three-stage heat treatment, especially two-phase region heat treatment at different high and low temperatures, precise control of steel material structure is achieved, particularly the accurate regulation of content, size, and morphology of high-stability austenite in the finished steel plate, thereby obtaining comprehensive properties of ultra-high strength, high plasticity, low yield ratio, excellent toughness, and excellent weldability. Moreover, based on low carbon + high nickel for stable austenite composition, combined with steel plate thickness using multi-scale complex phase microstructure precise control heat treatment technology, simultaneously achieving stable control of comprehensive quality properties such as ultra-high strength, good plasticity, and low-temperature toughness, which is conducive to improving the yield rate in large-scale industrial production;
3) Overall, it achieves comprehensive performance advantages of ultra-high strength, high plasticity, low yield ratio, excellent toughness, and excellent weldability in ultra-low temperature environments. For example, the steel plate has ultra-high yield strength above 1000MPa, elongation after fracture >20%, yield ratio <0.93, and impact energy ≥150J in ultra-low temperature environments of -80~-196°C, thus meeting the application requirements in offshore engineering fields such as extremely cold and deep-sea environments.

### BRIEF DESCRIPTION OF THE DRAWINGS

Figure 1 is a scanning electron microscope microstructure image of martensite and retained austenite at 5µm microscale of the finished steel plate in Example 5 of the present application;
Figure 2 is a transmission electron microscope image of nano-precipitated phases at 200nm microscale of the finished steel plate in Example 5 of the present application;
Figure 3 is an energy spectrum analysis image of Cu element distribution at 200nm microscale of the finished steel plate in Example 5 of the present application;
Figure 4 is an X-ray diffraction pattern of austenite γ phase and martensite α phase at 25°C, -80°C, and -196°C of the finished steel plate in Example 5 of the present application.

### DETAILED DESCRIPTION

The technical solution of the present application will be further described in combination with specific embodiments below. The following technical content is only exemplary embodiments of the present application and is not intended to limit the scope of protection of the present application. The scope of protection of the present application is determined by the appended claims.

This embodiment provides a cryogenic steel, particularly a steel plate suitable for use in low-temperature environments of offshore engineering. The chemical composition of the steel in mass percentage is: C: 0.07-0.13%, Si: 0.10-0.40%, Mn: 0.60-1.50%, Ni: 5.00-9.0%, Cr: 0.60-0.80%, Mo: 0.60-0.90%, V: 0.10-0.16%, Cu: 0.40-0.80%, P≤0.003%, S≤0.002%, with the balance being iron and inevitable impurities.

The following describes in detail the functions of each chemical element in the steel of this embodiment.

C: A strengthening element, increasing its content helps improve the strength of the steel, but has negative effects on the steel's plasticity and toughness, especially weldability; in this embodiment, the C content in mass percentage is 0.07-0.13%.

Si: A strengthening element that can inhibit the formation of bainite, carbide precipitation and coarsening, and improve toughness; in this embodiment, the Si content in mass percentage is 0.10-0.40%.

Mn: Mainly used to increase the strength and toughness of steel, while also increasing the content of metastable austenite to form multi-phase structures; in this embodiment, the Mn content in mass percentage is 0.60-1.50%.

Ni: Has solid solution strengthening effect, is the main alloying element for stabilizing austenite, lowers the Ar3 point, shifts the CCT curve to the right, promotes the formation of metastable austenite and increases its stability, and can form fine martensite structure, thereby improving the steel's strength and toughness; also because Ni affects the cross-slip of dislocations, it lowers the ductile-brittle transition temperature of steel; in this embodiment, the Ni content in mass percentage is 5.00-9.00%.

Cr: Shifts the continuous cooling transformation curve of steel to the right, improves the hardenability of steel, i.e., the ability to form martensite, while Cr dissolves in untransformed austenite, increasing the stability of supercooled austenite; in this embodiment, the Cr content in mass percentage is 0.60-0.80%.

Mo: An element that improves hardenability, expands the austenite phase region, plays an important role in controlling phase transformation structure, and can effectively improve material strength; lowers transformation temperature, reduces the critical cooling rate of bainite transformation, can effectively improve the stability of strength and toughness properties in the thickness direction of steel plate; meanwhile, Mo is also an element with high affinity for C, which can form nano-sized complex carbide (MoV)C particles together with V, achieving precipitation strengthening effect; in this embodiment, the Mo content in mass percentage is 0.60-0.90%.

V: Effectively refines the grain size of steel, while forming nano-sized complex carbide (MoV)C particles with Mo in steel, strongly hindering dislocation movement during deformation, thus significantly improving strength; in this embodiment, the V content in mass percentage is 0.1-0.16%.

Cu: Forms nano-sized Cu particle precipitated phases in the matrix structure, achieving precipitation strengthening effect, and additionally Cu can stabilize retained austenite, having the effect of increasing the content and stability of retained austenite, its content is controlled at 0.40-0.80%.

As above, the chemical composition of this embodiment, based on low carbon, adopts a design scheme of high nickel, high vanadium, low manganese + molybdenum, chromium, and copper. The low C content ensures the weldability and toughness of the steel, and low carbon and low manganese avoid the formation of large amounts of segregation banded structures, ensuring uniformity of structure and properties. High Ni content promotes the formation of retained austenite and, together with C, improves the stability of austenite. Mo and V can form nano-sized complex carbide (MoV)C particles to improve strength, while Cu element increases strength while enhancing the stability of retained austenite. As a result, it achieves comprehensive performance advantages of ultra-high strength (e.g., above 1GPa grade), high plasticity, low yield ratio, excellent toughness, and excellent weldability, thus meeting the application requirements in offshore engineering fields such as extremely cold and deep-sea environments.

Specifically, the microstructure of the steel plate in this embodiment consists of martensite and austenite, wherein the volume percentage of martensite is above 75% and less than 85%, and the volume percentage of austenite is above 15% and less than 25%. This microstructure can further ensure high strength, excellent low-temperature toughness, and good elongation. In the present application, the method for obtaining the volume percentages of martensite and austenite is a conventional technical means known in the field. For example, according to the international standard "ASTM E3-11(2017) Standard Guide for Preparation of Metallographic Specimens", samples are taken from 1/4 thickness of the steel plate to prepare metallographic specimens, and the prepared metallographic specimens are observed and measured under optical and scanning electron microscopes at 500× and 1000× magnification. Martensite and austenite are distinguished through different contrasts in micrographs, and their respective volume percentages are calculated.

Furthermore, the steel plate of this embodiment also has nano-precipitated phases of (MoV)C particles and Cu particles in trace amounts, with the volume percentage of precipitated phases being less than 0.1%, which significantly improves the strength of the steel based on precipitation strengthening. In the present application, the observation method for precipitated phases is a conventional technical means known in the field. For example, for observing (MoV)C particles and Cu particles in steel, samples are taken from 1/4 width and 1/4 thickness of the steel plate, prepared into thin film specimens of 30-50µm thickness, thin areas are prepared using electrolytic twin-jet method, and observation, measurement, and statistical analysis are performed under transmission electron microscope at 20000× to 100000× magnification. The precipitated phases are confirmed as nano-precipitated phases of (MoV)C particles and Cu particles with diameters above 5nm through EDS spectrum analysis, and the volume fraction of precipitated phases is obtained.

The thickness of the steel plate in this embodiment can be 10-100mm, with excellent performance under low-temperature conditions and strong performance stability. Specifically: at a cryogenic temperature of -196°C, the steel plate has a yield strength above 1200MPa, an elongation after fracture above 30%, a yield ratio below 0.84, and an impact energy KV2 above 150J; at a cryogenic temperature of -80°C, the steel plate has a yield strength above 1000MPa, an elongation after fracture above 25%, a yield ratio below 0.94, and an impact energy KV2 above 160J. In the present application, the low-temperature performance testing of the steel plate is a conventional technical means known in the field. For example, sampling of the obtained steel plate is performed according to the international standard "ASTM A673/A673M-17 Standard Specification for Sampling Procedure for Impact Testing of Structural Steel", and low-temperature performance testing is conducted on the samples according to the international standard "ASTM E2298-18 Standard Test Method for Instrumented Impact Testing of Metallic Materials" to obtain the yield strength, elongation after fracture, yield ratio, and impact energy KV2 under cryogenic conditions of -196°C and -80°C.

Furthermore, this embodiment also provides a production method for the aforementioned steel, which adopts the following process route: smelting → refining → continuous casting → heating → rolling → cooling → heat treatment. The manufacturing method will be described in detail according to the sequence of steps below.

### Step 1) Smelting → Refining → Continuous Casting

According to the previously mentioned chemical composition, smelting, refining, and continuous casting are performed sequentially to obtain a continuous casting slab; the chemical composition of this continuous casting slab is consistent with the previously mentioned chemical composition, namely in mass percentage: C: 0.07-0.13%, Si: 0.10-0.40%, Mn: 0.60-1.50%, Ni: 5.00-9.0%, Cr: 0.60-0.80%, Mo: 0.60-0.90%, V: 0.10-0.16%, Cu: 0.40-0.80%, P≤0.003%, S≤0.002%, with the balance being iron and inevitable impurities;

### Step 2) Heating

The continuous casting slab is heated in a heating furnace to 1100-1150°C and held for 2-3h; for example, any temperature value between 1100-1150°C is set in the soaking zone of the heating furnace, controlling the holding time of the continuous casting slab in the soaking zone for 2-3h;

### Step 3) Rolling

The continuous casting slab from the heating furnace is hot-rolled into a steel plate at a rolling temperature (starting rolling temperature) of 950-1050°C; thus, austenite can fully recrystallize and refine austenite grain size; furthermore, high-temperature rolling can effectively improve rolling efficiency and reduce mill load;

### Step 4) Cooling → Heat Treatment

The steel plate rolled in step 3 is laminar cooled at a cooling rate higher than 20°C/s to below 200°C; thus, after rolling, the steel plate undergoes rapid online cooling using a laminar cooling system, with the final cooling temperature controlled below 200°C, which can control the transformation structure to be martensite;
After cooling, three-stage heat treatment is performed sequentially to obtain the finished cryogenic steel;
Wherein, the first stage heat treatment is performed at a temperature of 800-850°C, with a holding time coefficient of 1.0-1.5min/mm, followed by water cooling. This stage of heat treatment can refine martensite and precipitate retained austenite, resulting in a structure of martensite + austenite, where austenite accounts for approximately 5-10% by volume; the second stage heat treatment temperature is controlled in the two-phase region (between Ac1 and Ac3), specifically at 700-720°C, with a holding time coefficient of 1.0-1.5min/mm, followed by water cooling. In this second stage heat treatment, further retained austenite is precipitated, resulting in the composite structure of martensite + austenite where austenite volume percentage increases to above 15% and less than 25%; the third stage heat treatment temperature is controlled in the two-phase region (between Ac1' and Ac3', where due to phase structure changes, Ac1' is less than Ac1, Ac3' is less than Ac3), specifically at 600-620°C, with a holding time coefficient of 2.0-2.5min/mm, followed by air cooling. In this third stage heat treatment, precipitated phases can form, namely trace amounts (volume percentage less than 0.1%) of nano-sized (MoV)C particles and Cu particles.

Thus, the production method of this embodiment, based on the chemical composition, achieves precise control of steel material structure through high-temperature rolling + rapid cooling + three-stage heat treatment, especially with two different high and low temperature two-phase region heat treatments, particularly enabling precise regulation of the content, size, and morphology of high-stability austenite in the finished steel plate, thereby obtaining comprehensive properties of ultra-high strength, high plasticity, low yield ratio, excellent toughness, and excellent weldability; moreover, the product performance is stable, which is conducive to improving the yield rate in large-scale industrial production.

Wherein, in step 1, smelting and refining can each be implemented using existing known feasible technologies, for example, using converter smelting or electric furnace smelting, and LF furnace + RH furnace refining technology. Preferably, when using LF furnace + RH furnace refining technology, both LF furnace refining and RH furnace refining times are controlled at 20-30min.

Preferably, in step 1, the tundish steel superheat during continuous casting is ≤20°C, Specifically it can be 10-20°C, and full protection casting is adopted, where the non-metallic inclusion ratings of class A (sulfide type), class B (alumina type), class C (silicate type), and class D (spherical oxide type) of the obtained continuous casting slab are all ≤0.5 grade. Thus, precise control of steel cleanliness can be achieved, thereby enhancing the performance of the final steel product.

Preferably, in step 3, the average reduction ratio per pass is above 15%, and the thickness of the obtained steel plate is 10-100mm. On one hand, the high reduction ratio scheme combined with high-temperature rolling can fully achieve austenite recrystallization and refine the initial austenite grain size of the steel plate; on the other hand, the present application is suitable for medium and thick plate manufacturing, meeting the requirements of offshore engineering steel.

More preferably, in step 4, when performing laminar cooling on the steel plate, the cooling rate is controlled below 30°C/s, that is, greater than 20°C/s but not exceeding 30°C/s, with the final cooling temperature between 30-200°C. Thus, the metallographic structure can be precisely controlled.

In summary, the advantageous effects of the present application are:
1) Based on low carbon content, adopting a design scheme of high nickel, high vanadium, low manganese + molybdenum, chromium, and copper, the low C content ensures the weldability and toughness of the steel, and low carbon and low manganese avoid the formation of large amounts of segregation banded structures, ensuring uniformity of structure and properties. High Ni content promotes the formation of retained austenite and, together with C, improves the stability of austenite. Mo and V can form nano-sized complex carbide (MoV)C particles to improve strength, while Cu element increases strength while enhancing the stability of retained austenite;
2) Based on the chemical composition, through high-temperature rolling + rapid cooling + three-stage heat treatment, especially with two different high and low temperature two-phase region heat treatments, achieving precise control of steel material structure, particularly enabling precise regulation of the content, size, and morphology of high-stability austenite in the finished steel plate, thereby obtaining comprehensive properties of ultra-high strength, high plasticity, low yield ratio, excellent toughness, and excellent weldability; moreover, based on low carbon + high nickel as stable austenite composition, combined with steel plate thickness using multi-scale complex phase microstructure precise control heat treatment technology, simultaneously achieving stable control of comprehensive quality properties such as ultra-high strength, good plasticity, and low-temperature toughness, which is conducive to improving the yield rate in large-scale industrial production;
3) Overall achieving comprehensive performance advantages of ultra-high strength, high plasticity, low yield ratio, excellent toughness, and excellent weldability in ultra-low temperature environments. For example, the steel plate has ultra-high yield strength above 1000MPa, elongation after fracture >20%, yield ratio <0.93, and impact energy ≥150J in ultra-low temperature environments of -80~-196°C, thus meeting the application requirements in offshore engineering fields such as extremely cold and deep-sea environments.

To make the technical solution and advantages of an embodiment of the present application clearer, Examples 1-6 according to this embodiment will be further described below. Obviously, the described Examples 1-6 are part of the embodiments of the present application, not all embodiments.

Specifically, Examples 1-6 all provide a steel material, with their respective manufacturing methods as follows:

### (1) Smelting → Refining → Continuous Casting

According to the previously mentioned chemical composition, smelting, LF refining, RH refining, and continuous casting are performed sequentially to obtain a continuous casting slab; wherein the LF refining treatment time, RH refining treatment time, tundish steel superheat during continuous casting, and the test results of inclusion ratings for classes A, B, C, and D of the obtained continuous casting slab are all shown in Table 1;

**[Table 1]**

| Example | LF refining treatment time/min | RH refining treatment time/min | tundish steel superheat/°C | Inclusion Level | | | |
|---|---|---|---|---|---|---|---|
| | | | | A | B | C | D |
| 1 | 21 | 21 | 10 | 0.5 | 0.5 | 0.5 | 0.5 |
| 2 | 20 | 24 | 15 | 0.5 | 0.5 | 0.5 | 0.5 |
| 3 | 24 | 22 | 14 | 0.5 | 0.5 | 0.5 | 0.5 |
| 4 | 25 | 21 | 16 | 0.5 | 0.5 | 0.5 | 0.5 |
| 5 | 23 | 20 | 14 | 0.5 | 0.5 | 0.5 | 0.5 |
| 6 | 21 | 24 | 14 | 0.5 | 0.5 | 0.5 | 0.5 |

The chemical composition of the continuous casting slab in mass percentage is shown in Table 2.

**[Table 2]**

| Example | C | Si | Mn | P | S | Cr | Ni | Mo | V | Cu |
|---|---|---|---|---|---|---|---|---|---|---|
| 1 | 0.08 | 0.35 | 0.70 | 0.002 | 0.002 | 0.61 | 9.0 | 0.67 | 0.13 | 0.43 |
| 2 | 0.11 | 0.28 | 1.40 | 0.001 | 0.001 | 0.78 | 8.1 | 0.86 | 0.16 | 0.75 |
| 3 | 0.13 | 0.10 | 1.50 | 0.002 | 0.001 | 0.80 | 5.8 | 0.90 | 0.12 | 0.55 |
| 4 | 0.10 | 0.17 | 0.98 | 0.001 | 0.001 | 0.67 | 5.0 | 0.60 | 0.10 | 0.40 |
| 5 | 0.07 | 0.40 | 0.84 | 0.001 | 0.001 | 0.74 | 7.5 | 0.76 | 0.14 | 0.80 |
| 6 | 0.09 | 0.24 | 0.60 | 0.002 | 0.001 | 0.70 | 6.7 | 0.81 | 0.15 | 0.64 |

### (2) Heating → Rolling → Cooling

The continuous casting slab is heated in a heating furnace and held for 2-3h, rolled into a steel plate after leaving the heating furnace, and the obtained steel plate is cooled on a laminar cooling system; wherein the soaking temperature in the heating furnace, rolling temperature, average reduction ratio per pass, cooling rate, and final cooling temperature for each example are shown in Table 3.

**[Table 3]**

| Example | soaking temperature/°C | Hot Rolling | | Cooling | |
|---|---|---|---|---|---|
| | | rolling temperature/°C | average reduction ratio per pass/% | cooling rate/(°C/s) | final cooling temperature/°C |
| 1 | 1100 | 1040 | 16 | 22 | 135 |
| 2 | 1140 | 1000 | 17 | 24 | 80 |
| 3 | 1150 | 980 | 19 | 28 | 50 |
| 4 | 1120 | 970 | 18 | 30 | 140 |
| 5 | 1110 | 1010 | 17 | 24 | 180 |
| 6 | 1130 | 1000 | 19 | 26 | 90 |

### (3) Three-stage Heat Treatment

The cooled steel plate undergoes three-stage heat treatment sequentially according to Table 4 below to obtain the finished steel plate.

**[Table 4]**

| Example | First stage heat treatment | | First stage heat treatment | | Second stage heat treatment | |
|---|---|---|---|---|---|---|
| | Temperature/°C | holding time coefficient /min·mm⁻¹ | temperature/°C | holding time coefficient/ min·mm⁻¹ | temperature/°C | holding time coefficient/ min·mm⁻¹ |
| 1 | 800 | 1.2 | 700 | 1.0 | 600 | 2.0 |
| 2 | 810 | 1.5 | 710 | 1.1 | 620 | 2.1 |
| 3 | 850 | 1.1 | 720 | 1.1 | 620 | 2.5 |
| 4 | 820 | 1.0 | 700 | 1.2 | 610 | 2.2 |
| 5 | 830 | 1.4 | 710 | 1.5 | 620 | 2.1 |
| 6 | 800 | 1.2 | 700 | 1.3 | 600 | 2.3 |

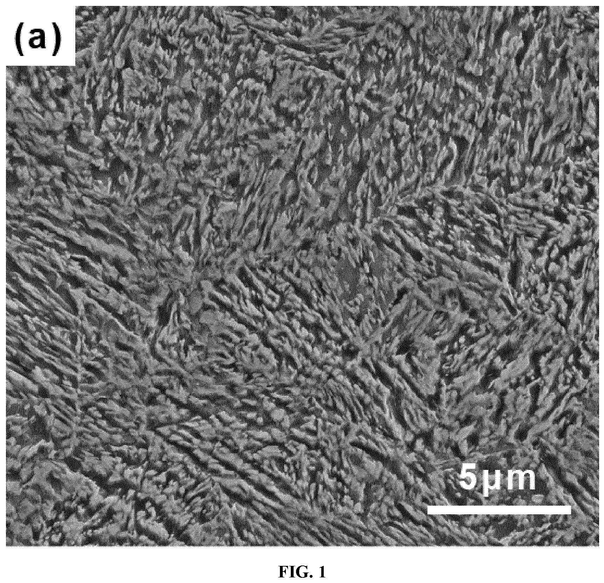

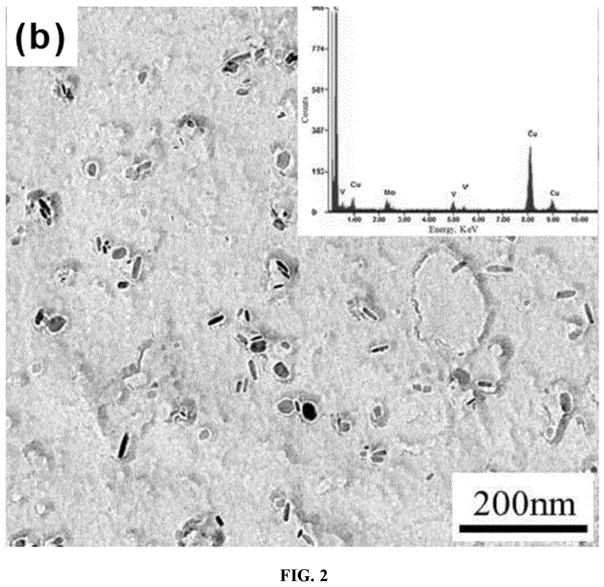

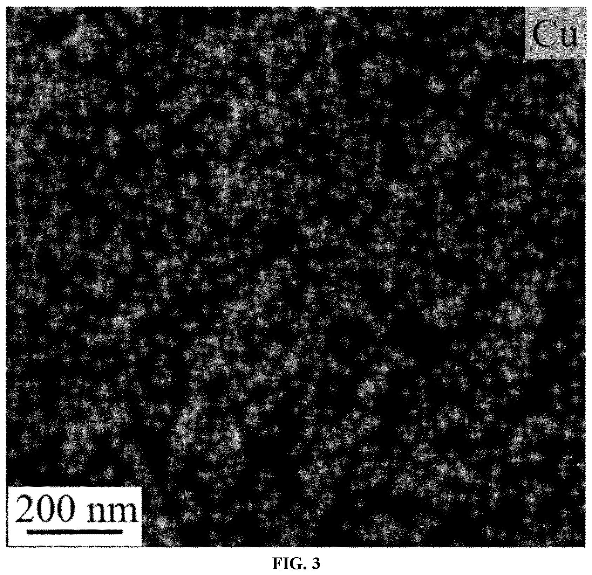

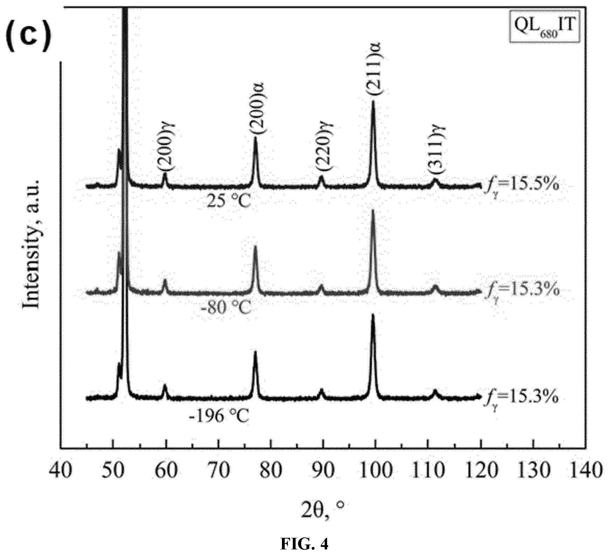

The microstructure and mechanical properties of the finished steel plates from each example were tested respectively:
1) The microstructure of the finished steel plates in all examples consists of martensite + austenite, wherein the volume percentage of martensite is above 75% and less than 85%, and the volume percentage of austenite is above 15% and less than 25%, with excellent low-temperature stability of austenite; furthermore, they also have nano-precipitated phases of (MoV)C particles and Cu particles with a total volume percentage less than 0.1%;
   Taking Example 5 as representative, as shown in Figures 1-4, demonstrating the microstructure morphology of the finished steel plate of the present application, where Figure 1 shows the matrix structure of Example 5 consisting of tempered lath martensite, with white regions being high-volume fraction of highly stable retained austenite, while Figures 2 and 3 show the nano-sized (MoV)C particles and Cu precipitated phases of Example 5 respectively; Figure 4 shows the X-ray diffraction patterns of the finished steel plate of Example 5 at 25°C, -80°C, and -196°C, displaying the volume fractions of austenite γ phase and martensite α phase, where the γ phase volume fraction remains stable at 15.5%, 15.3%, and 15.3%;
2) The mechanical properties of the finished steel plates from each example are shown in Table 5. As can be seen, the steel plates from all examples exhibit ultra-high yield strength above 1000MPa, elongation after fracture >20%, yield ratio <0.93, and impact energy KV2 ≥150J in ultra-low temperature environments of -80~-196°C, demonstrating excellent comprehensive properties at ultra-low temperatures, making them suitable for application as cryogenic steel in offshore engineering fields such as extremely cold and deep-sea environments.

**[Table 5]**

| Example | Thickness /mm | -80 °C | | | | | -196 °C | | | | |
|---|---|---|---|---|---|---|---|---|---|---|---|
| | | YS/MPa | TS/MPa | elongation after fracture/% | yield ratio | impact energy KV2/J | YS/MPa | TS/MPa | elongation after fracture/% | yield ratio | impact energy KV2/J |
| 1 | 18 | 1090 | 1164 | 25 | 0.936 | 179 | 1230 | 1497 | 32 | 0.822 | 156 |
| 2 | 20 | 1085 | 1160 | 28 | 0.935 | 165 | 1255 | 1506 | 34 | 0.833 | 160 |
| 3 | 24 | 1120 | 1204 | 26 | 0.930 | 182 | 1290 | 1549 | 33 | 0.833 | 158 |
| 4 | 26 | 1132 | 1225 | 29 | 0.924 | 173 | 1246 | 1531 | 33 | 0.814 | 164 |
| 5 | 30 | 1099 | 1213 | 30 | 0.906 | 169 | 1277 | 1540 | 34 | 0.829 | 169 |
| 6 | 21 | 1087 | 1184 | 29 | 0.918 | 189 | 1243 | 1498 | 33 | 0.830 | 159 |

## Claims

1. A cryogenic steel for offshore engineering, **characterized in that** the chemical composition thereof in mass percentage is: C: 0.07-0.13%, Si: 0.10-0.40%, Mn: 0.60-1.50%, Ni: 5.00-9.0%, Cr: 0.60-0.80%, Mo: 0.60-0.90%, V: 0.10-0.16%, Cu: 0.40-0.80%, P≤0.003%, S≤0.002%, with the balance being iron and inevitable impurities.

2. The cryogenic steel for offshore engineering according to claim 1, **characterized in that** the microstructure thereof comprises martensite and austenite.

3. The cryogenic steel for offshore engineering according to claim 2, **characterized in that** the volume percentage of martensite is above 75% and less than 85%, and the volume percentage of austenite is above 15% and less than 25%.

4. The cryogenic steel for offshore engineering according to claim 1, **characterized in that** it has nano-precipitated phases of (MoV)C particles and Cu particles, wherein the volume percentage of the precipitated phases is less than 0.1%.

5. The cryogenic steel for offshore engineering according to claim 1, **characterized in that** at a cryogenic temperature of -196°C, the cryogenic steel has a yield strength above 1200MPa, an elongation after fracture above 30%, a yield ratio below 0.84, and an impact energy above 150J.

6. The cryogenic steel for offshore engineering according to claim 1, **characterized in that** at a cryogenic temperature of -80°C, the cryogenic steel has a yield strength above 1000MPa, an elongation after fracture above 25%, a yield ratio below 0.94, and an impact energy above 160J.

7. A production method for a cryogenic steel for offshore engineering, **characterized in that** it comprises the following steps:
sequentially performing smelting, refining and continuous casting to obtain a continuous casting slab; wherein the chemical composition of the continuous casting slab in mass percentage is: C: 0.07-0.13%, Si: 0.10-0.40%, Mn: 0.60-1.50%, Ni: 5.00-9.0%, Cr: 0.60-0.80%, Mo: 0.60-0.90%, V: 0.10-0.16%, Cu: 0.40-0.80%, P≤0.003%, S≤0.002%, with the balance being iron and inevitable impurities;
heating the continuous casting slab in a heating furnace to 1100-1150°C and holding for 2-3h;
rolling the continuous casting slab from the heating furnace into a steel plate at a rolling temperature of 950-1050°C;
laminar cooling the obtained steel plate at a cooling rate higher than 20°C/s to below 200°C, and then sequentially performing three-stage heat treatment to obtain the finished cryogenic steel; wherein the first stage heat treatment is performed at a temperature of 800-850°C, with a holding time coefficient of 1.0-1.5min/mm and water cooling; the second stage heat treatment is performed at a temperature of 700-720°C, with a holding time coefficient of 1.0-1.5min/mm and water cooling; and the third stage heat treatment is performed at a temperature of 600-620°C, with a holding time coefficient of 2.0-2.5min/mm and air cooling.

8. The production method for the cryogenic steel for offshore engineering according to claim 7, **characterized in that** in the step of "rolling the continuous casting slab from the heating furnace into a steel plate", the average reduction ratio per pass is above 15%, and the thickness of the obtained steel plate is 10-100mm.

9. The production method for the cryogenic steel for offshore engineering according to claim 7, **characterized in that** in the step of "sequentially performing smelting, refining and continuous casting to obtain a continuous casting slab", the tundish steel superheat during continuous casting is ≤20°C, and full protection casting is adopted, wherein the inclusion ratings of class A, B, C and D of the obtained continuous casting slab are all ≤0.5 grade.

10. The production method for the cryogenic steel for offshore engineering according to claim 9, **characterized in that** the tundish steel superheat is 10-20°C.

11. The production method for the cryogenic steel for offshore engineering according to claim 7, **characterized in that** in the step of "laminar cooling the obtained steel plate at a cooling rate higher than 20°C/s to below 200°C", the laminar cooling is performed at a cooling rate below 30°C/s until the temperature drops to 30-200°C.
